# EUROPÄISCHE PATENTANMELDUNG

(11) **EP 2 073 201 A1**
(43) Veröffentlichungstag der Anmeldung: **24.06.2009**
(21) Anmeldenummer: 07123955.2
(22) Anmeldetag: 21.12.2007
(51) Int. Cl.: G11B 7/085, G11B 7/09, H02K 41/035

(54) **Schwingarm-Aktuator für eine Abtasteinrichtung**

(71) Anmelder: Deutsche Thomson OHG, 30625 Hannover (DE)
(72) Erfinder: Bammert, Michael, 78739, Hardt (DE)
(74) Vertreter: Arnold, Klaus-Peter

(57) **Zusammenfassung**

Die Erfindung betrifft einen Schwingarm, der einen als zweiarmiger Hebel ausgeführten Schwingarm aufweist, der zwischen den Hebelarmen um eine senkrecht zu diesem verlaufende Achse an einem Träger schwenkbar gelagert ist. Ein Hebelarm trägt endseitig einen optischen Kopf mit einer Fokuslinse und weist einen elastischen Bereich für eine Bewegung des optischen Kopfes in Fokussierungsrichtung senkrecht zur Schwenkebene des Schwingarmes auf. Der andere Hebelarm ist mit einer Spule eines Magnetantriebes für eine Schwenkbewegung um die Achse versehen. Zudem weist der Schwingarm-Aktuator einen Magnetantrieb für die Bewegung des optischen Kopfes in der Fokussierungsrichtung auf. Sie löst die Aufgabe, einen derartigen Schwingarm-Aktuator so zu gestalten, dass die Empfindlichkeit desselben erhöht wird. Dazu ist wenigstens einer der Magnetantriebe mit wenigstens einer gedruckten Spule (4, 5) ausgeführt, die mit wenigstens einer magnetfeldverstärkenden Schicht (14) versehen ist.

## Beschreibung

Die Erfindung betrifft einen Schwingarm-Aktuator für eine Abtasteinrichtung mit einem Abtastkopf, insbesondere einem eine Fokuslinse aufweisenden optischen Kopf, vorzugsweise zur Anordnung in einem Gerät zur Aufzeichnung und/oder Wiedergabe von Informationen.

Ein in einer optischen Abtasteinrichtung angeordneter Aktuator mit einem eine Fokuslinse aufweisenden optischen Kopf dient der Emission eines Lichtstrahls, insbesondere eines Laserstrahls, auf eine als Informationsträger ausgebildete optische Platte und dem Empfang des von dieser reflektierten Strahls. Die optische Platte wird dabei von einer Trägervorrichtung gehalten und zu einer Rotationsbewegung angetrieben. Der Aktuator kann als zweiarmiger Schwingarm-Aktuator ausgebildet sein, bei dem der optische Kopf an einem freien Ende angeordnet ist. Der Schwingarm ist um eine Achse schwenkbar und bewegt das Ende mit dem optischen Kopf in Form eines Bogens in einer zur Aufzeichnungsoberfläche der optischen Platte parallelen Ebene (Tracking) und ist mit seinem Kopf senkrecht zu dieser Ebene fokussierbar (Fokusing). Mit einem Schwingarm-Aktuator sind kurze Zugriffszeiten auf unterschiedliche Orte des Aufzeichnungsträgers zu erreichen.

Ein derartiger Schwingarm-Aktuator ist beispielsweise in der US 2004/0148619 A1 beschrieben. Der dort beschriebene Schwingarm-Aktuator ist schwenkbar um eine Achse an einem Träger angeordnet und weist dazu an seinem dem optischen Kopf gegenüberliegenden Endbereich einen Magnetantrieb auf, der aus einer fest am Träger angeordneten Magnetanordnung und einer auf dem Schwingarm angeordneten Spule gebildet ist, deren Betriebsstrom gesteuert wird. Der Schwingarm weist auf der dem Magnetantrieb abgewandten Seite der Schwenkachse, also fokuslinsenseitig, einen elastischen Bereich (Blattfederanordnung) auf, der an seinem freien Ende den optischen Kopf trägt. Diesem elastischen Bereich, der vom übrigen Schwingarm teilumschlossen ist, ist kopfseitig ein zweiter, mit dem Schwingarm ausgebildeter Magnetantrieb zugeordnet, der das freie Ende und damit den Kopf in Fokussierungsrichtung bewegen kann. Als nachteilig kann angesehen werden, dass der kopfseitige Teil (Hebelarm) des Schwingarmes gewichtsintensiv ist, so dass eine Schwenkbewegung des Schwingarmes um die Achse mit einer erhöhten Trägheit desselben einhergeht.

Es ist Aufgabe der Erfindung, einen Schwingarm-Aktuator für eine Abtasteinrichtung nach dem Oberbegriff des Anspruchs 1 so zu gestalten, dass die Empfindlichkeit des Schwingarm-Aktuators erhöht wird.

Diese Aufgabe wird bei einem Schwingarm-Aktuator nach dem Oberbegriff des Anspruchs 1 durch dessen kennzeichnende Merkmale gelöst. Vorteilhafte Ausgestaltungen sind in den Unteransprüchen aufgeführt.

Der Schwingarm-Aktuator für eine Abtasteinrichtung weist einen als Hebel ausgeführten Schwingarm, der um eine senkrecht zu dem Hebel verlaufende Achse an einem Träger schwenkbar gelagert ist, und einen Magnetantrieb für die Bewegung des Schwingarms auf, wobei der Hebel einen Abtastkopf trägt. Der Magnetantrieb ist mit wenigstens einer gedruckten Spule ausgeführt, die mit wenigstens einer magnetfeldverstärkenden Schicht versehen ist.

In einem bevorzugten Ausführungsbeispiel ist der Schwingarm des Schwingarm-Aktuators als zweiarmiger Hebel ausgeführt, der an dem Träger schwenkbar um die senkrecht zu diesem verlaufende Achse gelagert ist, wobei der Abtastkopf ein optischer Kopf mit einer Fokuslinse ist. Für eine Schwenkbewegung des optischen Kopfes um die Achse (Trackingrichtung) und für eine Bewegung desselben senkrecht zu dieser Schwenkebene (Fokussierungsrichtung) sind an einem Hebelarm des Schwingarms jeweils Spulen angeordnet, die mit am Träger angeordneten Magneten zusammenwirken und jeweils einen Magnetantrieb bilden. Wenigstens eine der die Magnetantriebe (mit-) bildenden Spulen, insbesondere für die Schwenkbewegung um die Achse, eine Trackingbewegung, ist als gedruckte Spule ausgeführt, die mit wenigstens einer magnetfeldverstärkenden Schicht versehen ist.

Damit ist ein gewichtsreduzierter Schwingarm-Aktuator geschaffen, bei dem zudem das magnetische Feld der Spule verstärkt ist, was sich in einer erheblichen Erhöhung der Empfindlichkeit des Schwingarmes auswirkt. Eine derartige Schicht lässt sich während des Herstellungsprozesses der gedruckten Spule auf einfache Weise durch eine in der Mikroelektronik-Technologie übliche Beschichtungsmethode einbringen. Ein derart gestalteter Schwingarm-Aktuator kann mit erheblich verkürzten Zeiten auf unterschiedliche Orte eines Aufzeichnungsträgers zugreifen.

Insbesondere ist die Spule mehrlagig ausgeführt und weist zwischen den Lagen jeweils eine magnetfeldverstärkende Schicht auf. Bevorzugt sind diese Schichten jedoch nur in den Bereichen der Spule ausgebildet, die maßgeblich für den Magnetantrieb sind. Bei der die Schwenkbewegung des Schwingarmes um die Achse veranlassenden Tracking-Spule, die zwei radial zur Schenkachse gerichtete Stränge und zwei koaxial zur Schwenkachse angeordnete Stränge aufweist, sind das die radial ausgerichteten Stränge. Eine weitere Erhöhung der Empfindlichkeit des Schwingarm-Aktuators, verbunden mit einer Verkürzung der Zugriffszeiten auf unterschiedliche Orte des jeweiligen Aufzeichnungsträgers, wird erreicht, wenn mehrere Trackingspulen nebeneinander angeordnet sind, so dass eine größere Anzahl radial ausgerichteter Stränge vorhanden sind.

Eine weitere Gewichtseinsparung am Schwingarm ergibt sich, wenn der Magnetantrieb für die Bewegung des optischen Kopfes in der Fokussierungsrichtung dem Hebelarm zugeordnet ist, der die Trackingspule trägt. Die Spule für die Fokussierungsbewegung, die Fokusspule, kann dabei ebenfalls mit wenigstens einer magnetfeldverstärkenden Schicht versehen sein. In der Draufsicht auf den Schwingarm umgibt die Fokusspule dabei eine kreisbogenförmige Ausnehmung für den Schenkel eines im Querschnitt U-förmigen und mit einem Magneten verbundenen Joches. Bei dieser Fokusspule sind die gekrümmten Stränge maßgeblich für den Magnetantrieb und die Fokussierungsbewegung, so dass diese mit einer, oder, wenn die Spule mehrlagig ausgeführt ist, mit mehreren magnetfeldverstärkenden Schichten versehen sein kann.

Die wenigstens eine magnetfeldverstärkende Schicht kann aus einem ferromagnetischen Material, beispielsweise einem Ferrit, bestehen.

Die Erfindung wird nachstehend anhand eines Ausführungsbeispiels erläutert. In den zugehörigen Zeichnungen zeigen:
Fig. 1: eine perspektivische Draufsicht auf einen Schwingarm-Aktuator mit Spulen- und Magnetanordnung;
Fig. 2: eine Längsschnitt-Darstellung des Schwingarm-Aktuators;
Fig. 3a: eine Trackingspule;
Fig. 3b: eine Fokusspule und
Fig. 4: den längsgeschnittenen Schwingarm-Aktuator auf einem Träger.

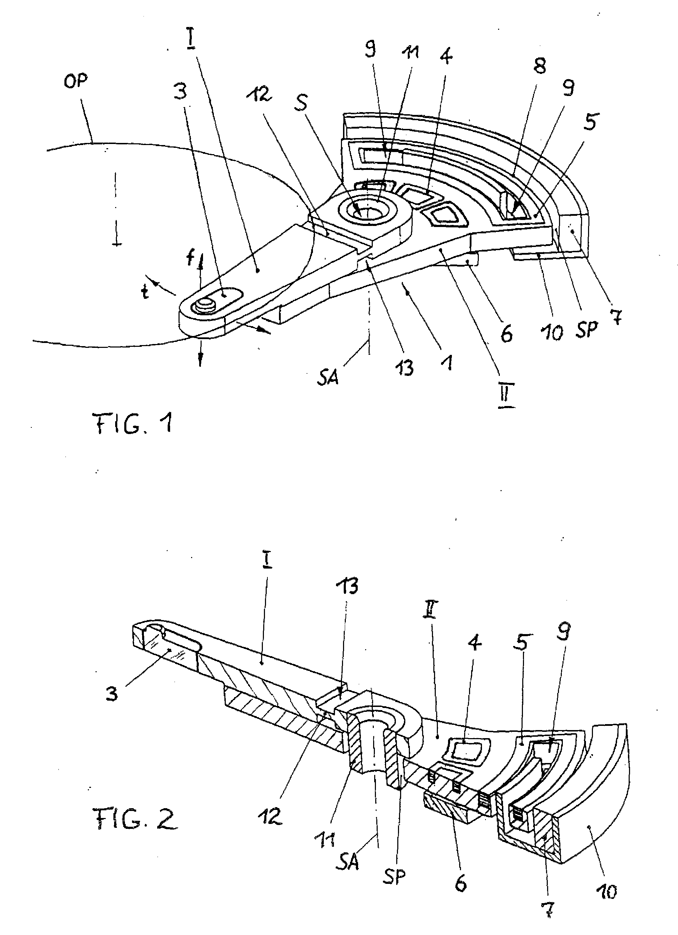

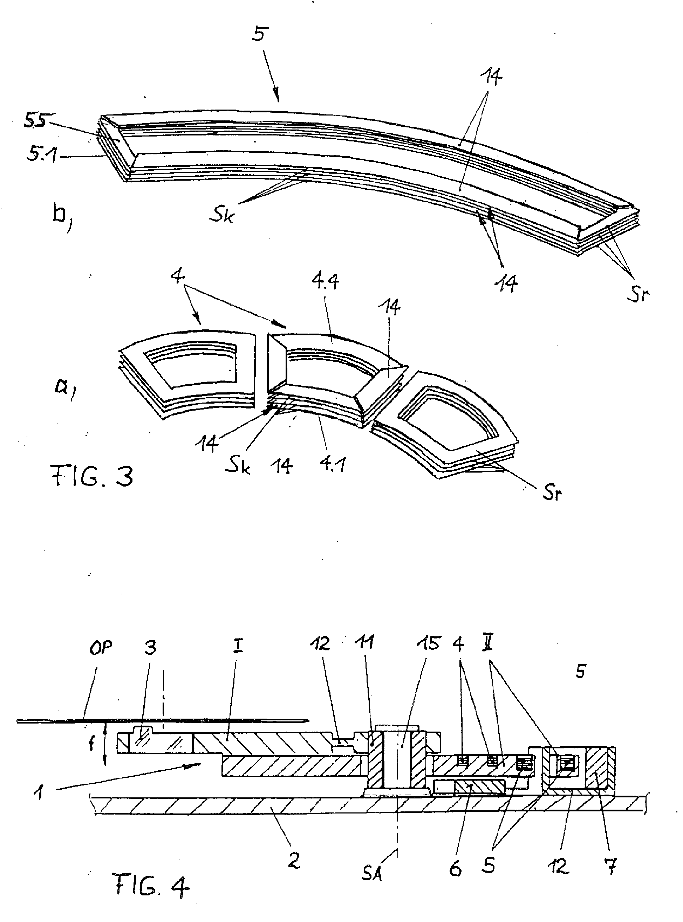

Der in Fig. 1 gezeigte Schwingarm-Aktuator für eine nicht dargestellte optische Abtasteinrichtung weist einen torsionssteifen Schwingarm 1 auf, der in der Art eines zweiarmigen Hebels gestaltet ist und in seinem Schwerpunkt S zwischen den Hebelarmen 1 und II an einem Träger 2, in der Fig. 4 dargestellt, um eine senkrecht zum Schwingarm 1 verlaufende Schwenkachse SA schwenkgelagert ist. Der Hebelarm I trägt endseitig einen optischen Kopf 3 mit einer Fokuslinse. In dem anderen Hebelarm II sind mehrlagige gedruckte Spulen 4 und 5 integriert, die aus jeweils zwei radial zur Schwenkachse SA ausgerichteten Strängen und zwei koaxial zu dieser (SA) ausgerichteten Strängen gebildet sind. Die Spulen 4 und 5 stehen mit diesen zugeordneten trägerfesten Magneten 6 und 7 in Wirkverbindung und bilden mit diesen Magneten 6, 7 Magnetantriebe für den Schwingarm 1 aus. Mit OP ist eine optische Platte angedeutet, der der optische Kopf 3 zugeordnet ist.

Dieser Hebelarm II weist einen bezüglich der Schwenkachse koaxial verlaufenden Randbereich 8 mit einer im Abstand von diesem koaxial gestalteten Ausnehmung 9 auf, die an der Ober- und Unterseite jeweils von der gedruckten Spule 5 umgeben ist. In die Ausnehmung 9 greift ein Schenkel eines U-förmigen und mit dem Magneten 7 verbundenen Jochs 10 berührungslos ein, wobei der Magnet 7 selbst den Randbereich 8 an dessen Außenseite mit Spiel SP koaxial umschließt. Der auf diese Weise gebildete Magnetantrieb bewirkt eine Bewegung des Schwingarmes 1 senkrecht zur Schwenkebene in der Fokussierungsrichtung f.

Im Bereich zwischen diesem ersten Magnetantrieb und der Schwenkachse SA ist der ringabschnittförmige trägerfeste Magnet 6 koaxial zur Schwenkachse SA und im Abstand zum Schwingarm 1 angeordnet. Diesem Magneten 6 sind die Spulen 4 zugeordnet. Der mit diesen Spulen 4 und dem Magneten 6 gebildete Magnetantrieb dient der Erzeugung einer Schwenkbewegung des Schwingarmes 1 um die Schwenkachse SA, insbesondere um eine Trackingbewegung in Trackingrichtung t radial zu der optischen Platte OP.

Der den optischen Kopf 3 tragende Hebelarm I ist mit einer Lagerbuchse 11 drehfest verbunden und weist für eine Bewegung dieses Kopfes 3 in der Fokussierungsrichtung f senkrecht zur Schwenkebene einen elastisch biegbaren Bereich 12 auf. Mit diesem Hebelarm I ist der Hebelarm II im Bereich zwischen dem optischen Kopf 3 und dem Bereich 12 fest verbunden, auschließlich in diesem Bereich gehaltert und somit auf der dem optischen Kopf abgewandten Seite des biegbaren Bereiches 12 bis zu seinem Randbereich 8 freischwebend. Der Bereich 12 ist durch eine an der Unterseite und der Oberseite des Hebelarmes I eingebrachte Nut 13 gegenüber der Dicke dieses Hebelarmes I erheblich reduziert und dabei in seiner Dicke derart ausgelegt, dass der kopfseitige Teil des ansonsten biegesteifen Hebelarmes I bei einer Beaufschlagung des Hebelarmes II durch den ersten, mit dem Magneten 7 gebildeten Magnetantrieb in der Fokussierungsrichtung fbewegt wird. Über die feste Verbindung der beiden Hebelarme I und II wird auch die Schwenkbewegung des Hebelarmes I um die Schwenkachse SA infolge einer Schwenkbewegung des Hebelarmes II durch den zweiten, mit dem Magneten 6 gebildeten Magnetantrieb und damit also eine Schwenkbewegung des gesamten Schwingarmes 1 bewirkt.

Fig. 2 zeigt insbesondere die Ausbildung und Anordnung der Spulen 4 und 5 sowie der zugehörigen Magneten 6 und 7 und die freischwebende Anordnung des Hebelarmes II, die durch ein Spiel SP gegenüber der Lagerbuchse 11 gekennzeichnet ist. Die Spulen 4 sind jeweils mit vier Cu-Lagen 4.1 bis 4.4 und die Spule 5 mit fünf Cu-Lagen 5.1 bis 5.5 gebildet und in das Kunststoffmaterial des Schwingarmes 1 eingebettet, so dass diese Spulen 4, 5 bündig mit der Oberfläche desselben abschließen.

In den Fig. 3a und 3b sind die mehrlagigen Spulen 4 und 5 jeweils als Einzelheit dargestellt. Die mittlere Spule 4 in Fig. 3a ist mit magnetfeldverstärkenden Ferritschichten 14 zwischen den Lagen 4.1 bis 4.4 versehen und mit einer solchen Ferritschicht 14 oberseitig abgeschlossen. Die Ferritschichten 14 befinden sich dabei jeweils zwischen den Lagen in den radial ausgerichteten Strängen Sr. Die Spule 5 ist ebenfalls mit Ferritschichten 14 magnetfeldverstärkt. Bei dieser sind die Ferritschichten in den koaxial gekrümmten Strängen Sk angeordnet. Mit derartig ausgebildeten Spulen 4 und 5 lässt sich die Empfindlichkeit des Schwingarm-Aktuators in beiden Richtungen f, t deutlich steigern. Beispielsweise ermöglichen mehrere mehrlagige nebeneinander angeordnete magnetfeldverstärkte Spulen 4 eine Erhöhung der Empfindlichkeit in der Trackingrichtung t um weit über 50%.

In Fig. 4 ist die Anordnung und Lagerung des Schwingarmes 1 an einem Träger 2 dargestellt. An diesem ist ein Lagertapfen 15 fest angeordnet, an dem der Schwingarm 1 mit der Lagerbuchse 11 drehbar gelagert ist. Die dem Schwingarm 1 und dessen optischen Kopf 3 zugeordnete optische Platte OP befindet sich in Parallelanordnung zu diesem. Durch eine Schwenkbewegung des Schwingarmes 1 um die Schwenkachse SA wird der optische Kopf 3 radial zur Platte OP bewegt, in (Trackingrichtung t, Fig. 1. Die Fokussierung eines bestimmten Punktes auf der Platte OP wird durch eine Bewegung des Hebelarmes II und damit des optischen Kopfes 3 in Fokussierungsrichtung f senkrecht zur Trackingrichtung t ermöglicht.

## Patentansprüche

1. Schwingarm-Aktuator für eine Abtasteinrichtung, mit einem als Hebel ausgeführten Schwingarm, der einen Abtastkopf trägt und der um eine senkrecht zu dem Hebel verlaufende Achse an einem Träger schwenkbar gelagert ist, und mit einem Magnetantrieb für die Bewegung des Abtastkopfes, **dadurch gekennzeichnet, dass** der Magnetantrieb mit wenigstens einer gedruckten Spule (4, 5) ausgeführt ist, die mit wenigstens einer magnetfeldverstärkenden Schicht (14) versehen ist.

2. Schwingarm-Aktuator nach Anspruch 1, **dadurch gekennzeichnet, dass** die Spule (4, 5) mehrlagig ausgeführt ist, und dass zwischen den Lagen (4.1 - 4.4, 5.1 - 5.5) jeweils eine magnetfeldverstärkende Schicht (14) angeordnet ist.

3. Schwingarm-Aktuator nach Anspruch 1 oder 2, **dadurch gekennzeichnet, dass** die Spule (4) des Magnetantriebes als eine Tracking-Spule (4) für die Schwenkbewegung um die Achse (SA) magnetfeldverstärkt ist.

4. Schwingarm-Aktuator nach Anspruch 3, **dadurch gekennzeichnet, dass** die Tracking-Spule (4) des Magnetantriebes für die Trackingbewegung (t) zwei radial zur Schwenkachse (SA) verlaufende Stränge (Sk) und zwei koaxial zur Schwenkachse (SA) verlaufende Stränge (Sr) aufweist, und dass die radial ausgerichteten Stränge (Sr) magnetfeldverstärkt sind.

5. Schwingarm-Aktuator nach Anspruch 4, **dadurch gekennzeichnet, dass** mehrere Tracking-Spulen (4) nebeneinander und koaxial zur Schwenkachse (SA) angeordnet sind.

6. Schwingarm-Aktuator nach einem der vorhergehenden Ansprüche, **dadurch gekennzeichnet, dass** die magnetfeldverstärkende Schicht (14) aus einem ferromagnetischen Material gebildet ist.

7. Schwingarm-Aktuator nach Anspruch 6, **dadurch gekennzeichnet, dass** als ferromagnetisches Material ein Ferrit verwendet wird.

8. Schwingarm-Aktuator nach einem der vorhergehenden Ansprüche, **dadurch gekennzeichnet, dass** die magnetfeldverstärkte Spule (4, 5) in das Material des Schwingarmes (1) eingebettet ist.

9. Schwingarm-Aktuator nach einem der vorhergehenden Ansprüche, **dadurch gekennzeichnet, dass** der Hebel als zweiarmiger Hebel ausgeführt ist, der zwischen den Hebelarmen an dem Träger schwenkbar gelagert ist, und dass der Abtastkopf ein optischer Kopf mit einer Fokuslinse ist, wobei ein Hebelarm endseitig den optischen Kopf für eine Bewegung des optischen Kopfes in einer Fokussierungsrichtung senkrecht zur Schwenkebene trägt, und wobei der zweite Hebelarm die Tracking-Spule (4) aufweist.

10. Schwingarm-Aktuator nach Anspruch 9, **dadurch gekennzeichnet, dass** der Hebel eine Spule (5) eines Magnetantriebes für eine Bewegung des optischen Kopfes in eine Fokusierungsrichtung aufweist, wobei die Spule (5) für die Fokusbewegung ebenfalls als eine gedruckte Spule (5) mit einer magnetfeldverstärkenden Schicht (14) ausgeführt ist, und der Magnetantrieb für die Bewegung des optischen Kopfes (3) in der Fokusierungsrichtung (f) dem Hebelarm (II) zugeordnet ist, der die Tracking-Spule (4) aufweist.

11. Schwingarm-Aktuator nach Anspruch 9 oder 10, **dadurch gekennzeichnet, dass** der den optischen Kopf (3) tragende Hebelarm (I) mit einem Lagerelement (11) drehfest verbunden ist, das eine Schwenkbewegung um die Achse (SA) ermöglicht, und dass der Hebelarm (II) im Bereich zwischen dem optischen Kopf (3) und dem elastisch biegbaren Bereich (12) des Hebelarmes (I) fest mit diesem Hebelarm (I) verbunden und auf der dem optischen Kopf (3) abgewandten Seite des Bereiches (12) frei schwebend ist.

12. Schwingarm-Aktuator nach Anspruch 11, **dadurch gekennzeichnet, dass** der biegbare Bereich (12) ein im Längsschnitt des Hebelarmes (I) dickenreduzierter oder perforierter Bereich ist.

13. Schwingarm-Aktuator nach Anspruch 10, 11 oder 12, **dadurch gekennzeichnet, dass** die Spule (5) für die Fokusierungsrichtung (f) in der Draufsicht auf den Schwingarm (1) eine im Endbereich des zweiten Hebelarmes (II) ausgebildete kreisbogenförmige Ausnehmung (9) für einen Schenkel eines im Querschnitt U-förmigen Joches (10) umgibt, und dass die gekrümmten Stränge (Sk) der FokusSpule (5) mit wenigstens einer magnetfeldverstärkenden Schicht (14) versehen sind.

14. Schwingarm-Aktuator nach einem der vorhergehenden Ansprüche, **dadurch gekennzeichnet, dass** dieser und eine mit diesem gebildete optische Abtasteinrichtung in einem Gerät zum Lesen und/ oder Schreiben optischer Speichermedien verwendet wird.
